# EUROPEAN PATENT SPECIFICATION

(11) **EP 0 517 423 B1**
(45) Date of publication and mention of the grant of the patent: **01.03.1995**
(21) Application number: 92304817.7
(22) Date of filing: 28.05.1992
(51) Int. Cl.: A23P 1/06, A23L 1/0522, A23L 1/187, A23L 1/0562, A23L 1/0524, A23L 1/0526, A23L 1/0532

(54) **Readily-dispersible, Hydrocolloid containing agglomerates and process therefor**
Hydrokolloide enthaltende, leicht dispergierbare Agglomerate und Verfahren zu deren Herstellung
Agglomérats contenant des hydrocolloides aisément dispersables et procédé pour leur préparation

(30) Priority: 04.06.1991 US 710733
(43) Date of publication of application: 09.12.1992
(73) Proprietor: KRAFT GENERAL FOODS, INC., White Plains New York 10625 (US)
(72) Inventor: Eng, Jean Lee, Mahwah, New Jersey 07430 (US); Lehmann, Douglas Martin, Park Ridge, New Jersey 07656 (US)
(74) Representative: Eyles, Christopher Thomas

(56) References cited:
- EP-A- 0 009 858
- EP-A- 0 428 427
- DE-A- 3 501 237
- FR-A- 2 409 789
- GB-A- 1 216 349
- GB-A- 2 132 869
- US-A- 3 364 036
- WORLD PATENTS INDEX Week 7341, Derwent Publications Ltd., London, GB; AN 73-61613U (41)
- PATENT ABSTRACTS OF JAPAN vol. 9, no. 112 (C-281)(1835) 16 May 1985
- WORLD PATENTS INDEX Week 7008, Derwent Publications Ltd., London, GB; AN 70-11482R (08)

## Description

### BACKGROUND OF THE INVENTION

The present invention relates to a dry hydrocolloid-containing composition that when hydrated readily disperses in cold aqueous fluids, such as water or milk. This invention is particularly useful in the production of dry dessert mixes, such as instant pudding mixes, and has particular use for the production of dry, sugar-free, instant pudding mixes.

It has long been known that dry, water-gellable/viscosity-building, hydrocolloid food materials, such as pectin, gelatin, pregelatinized starch and vegetable gums, disperse and hydrate in cold water or milk only with difficulty. The use of finely ground particles of these materials has been tried in order to increase surface area, increase the rate of hydration and improve texture (i.e., smoothness) of the prepared food product. Unfortunately, the presence of these fine particles has led to another problem -- namely, clumping of the particles when they are combined with cold water or milk. With these problems in mind the prior art has sought techniques to enable both hydration and dispersion of hydrocolloid materials. These techniques have included use of various dispersants, surfactants, wetting agents, bulking agents as well as various blending and agglomeration techniques. Illustrative of this prior art are U.S. Patents 2,819,970 to Steigmann (fine-grind gelatin coated with a dispersant), 2,819,971 to Gunthardt (fine-grind gelatin coated with lecithin), 3,364,036 to Tesko et al. (fine-grind gelatin coated with triacetin), 3,443,990 to Decnop (heating and drying a mixture of gelatinized starch and a glyceride), 3,582,350 to Werbin et al. (heating and drying an aqueous slurry of pregelatinized starch and a hydrophopic shortening material), 3,987,207 to Spaeti et al. (mixing oil or fat-coated particles of pregelatinized starch material with a dispersion aid and agglomerating with water), 4,016,337 to Hsu (coagglomerating pregelatinized starch and silicon dioxide and coating with a fat-glycerol emulsion), 4,491,483 to Dudacek et al. (a heat and moisture treated starch and fatty acid surfactant product), 4,663,177 to Weaver et al. (sugar-free instant pudding mix containing a non-sugar bulking/dispersing agent), 4,769,081 to Maher (use of a glyceride surfactant to increase starch dispersibility), 4,871,398 to Katcher et al. (a continuous process for producing agglomerated spray-dried starch), and 4,969,955 to Rudin (pregelatinized starch coated with a food grade emulsifier).

The use of fine-grind starch in sugar-containing instant pudding mixes is disclosed in U.S Patents 4,361,592 to Carpenter et al., 4,438,148 to O'Rourke et al. and 4,469,712 to Katcher et al. The presence of the large amount of sugar present in these prior art mixes will prevent clumping of the fine-grind starch upon combining the pudding mix with cold milk. In a sugar-free product, such as disclosed in U.S. Patent 4,695,474 to Cuneo et al., relatively-coarse particle sized starch is employed.

### SUMMARY OF THE INVENTION

A readily-dispersible, hydrocolloid-containing food material is produced by spraying fine particles of the hydrocolloid with an aqueous solution of a wetting agent and to agglomerate and spray-coat the particles. The agglomerated material produced in accordance with this invention is surprisingly easy to disperse in cold aqueous fluids, such as cold milk or water. The material can be essentially completely dispersed into a cold aqueous fluid by means of a wire whisk in less than one minute, even in cases where the agglomerate is comprised of only the hydrocolloid material and wetting agent. Where the agglomerate also contains a filler material, such as sugar, maltodextrin, cocoa, etc., the agglomerate can be essentially completely dispersed in the cold fluid by means of only spoon stirring in less than one minute.

This invention is particularly applicable to particles of pregelatinized starch wherein the agglomerates are utilized as an ingredient in instant pudding mixes, instant gravies and sauces, instant cereals and the like. The pregelatinized starch agglomerates are surprisingly functional even in sugar-free instant pudding mixes where the absence of sugar particles has made dispersibility of pregelatinized starch a notorious problem.

Although exemplified primarily in terms of pregelatinized starch, this invention is also useful for producing dispersible particles of other food hydrocolloids such as pectin, gelatin and polysaccharide gums, such as gellan, carrageenan, alginate, guar, etc.

The wetting agent must be a water-soluble, food-acceptable ingredient with little or no emulsifying capability and with no objectionable flavor. Emulsification properties are undesirable in the wetting agent in order to minimize or eliminate interactions with lipid fractions (e.g., milk fat) which may be present in the prepared food product. Typical of such materials are triacetin, glycerol, propylene glycol and tributyrin. The aqueous wetting agent solution will preferably contain from 0.1 to 7% wetting agent by weight of the solution and be sprayed onto the material being agglomerated at a level of 0.1 to 3% wetting agent by weight of the hydrocolloid in the material being agglomerated. Desirably, all of the wetting agent will be dissolved in the solution; however, some undissolved wetting agent can be tolerated.

Agglomeration may be effected in either a continuous or batch manner. The type of agglomerator is not critical and equipment such as fluidized bed or tower agglomerators are suitable. The agglomerated material should have a moisture content of less than about 10%, typically 7 to 9%, by weight. Reduction of moisture content can occur entirely within the agglomeration apparatus or, if needed or desired, a separate drying step may be employed.

### DETAILED DESCRIPTION OF THE INVENTION

The present invention relates to production of a hydrocolloid-containing, readily-dispersible, food agglomerate which can be characterized as a "friable" agglomerate. In accordance with this invention "friable" is intended to mean that the agglomerate contains internal voids and that the particles which constitute the agglomerate are merely tacked together such that upon mixing with water or milk, or upon compression, such as might be effected by rubbing the agglomerate between the thumb and forefinger, the agglomerate will break apart into essentially the pre-agglomerate sized particles. The agglomerates must of course have sufficient strength to resist attrition during the conveying and blending that is normally experienced by dry food mix ingredients.

The hydrocolloid material (e.g., pregelatinized starch, pectin, etc.) to be agglomerated should preferably have a particle size distribution of 0.5% maximum on a 140 mesh U.S. sieve (106 »m) and 15% minimum on a 400 mesh U.S. sieve (38 »m). More preferred particle size distributions, especially for pregelatinized starch, are as set forth in the aforementioned Katcher et al. patent (4,469,712) wherein between 1 to 10%, preferably 1.5 to 10%, by weight of the particles have a particle size greater than about 63 microns (230 U.S. mesh), less than 1%, preferably less than 0.5%, by weight is greater than about 105 microns (140 mesh), less than 3%, preferably less than 2%, is greater than about 88 microns (170 mesh) and less than 6% is greater than about 74 microns (200 mesh). Most preferably wherein about 6% to about 34% by weight of the particles have a particle size between about 38 microns (400 mesh) and 44 microns (325 mesh) and between about 3% and about 30% of the particles have particle sizes between about 44 microns (325 mesh) and 63 microns (230 mesh). Other hydrocolloid materials can also have these preferred particle size distributions. All particle size analysis used to describe this invention were conducted using an Alpine™ sieve apparatus, a piece of equipment well-known in the food industry.

If the ground hydrocolloid particles are to be co-agglomerated with water-soluble materials which are readily-dispersible, such as sugar, it is not necessary to grind these other materials to the fineness of the hydrocolloid particles. These particles should not be so large, however, that they preclude the formation of stable, properly-sized agglomerates.

The level of wetting agent which is applied to the surface of the materials being agglomerated is about 0.1 to 3%, preferably 0.2 to 1%, of the wetting agent by weight of the hydrocolloid material. Typically the wetting agent solution is sprayed onto the material being agglomerated over an extended period of time, which in the case of batch agglomeration procedures might be for a major part of the agglomeration period.

The agglomeration process is conducted to produce "friable" agglomerates typically having a particle size weight distribution wherein there is a 90% maximum through a 60 U.S. mesh sieve (250 »m), 50% maximum through a 100 U.S. mesh sieve (150 »m) and 10% maximum through a 270 U.S. mesh sieve (53 »m). A preferred agglomerate size distribution is 25 to 55% through a 100 U.S. mesh sieve (150 »m) and 0 to 8% through a 270 U.S. mesh sieve (53 »m). Agglomeration according to this invention should result in a bulk density reduction of at least 50%. In the case of agglomerates which consist essentially of ground hydrocolloid particles the density of the agglomerate should be from 0.1 to 0.3g/cc, and for pregelatinized starch preferably from 0.14 to 0.20g/cc. A suitable material for use in this invention is pregelatinized, spray-dried dent, cornstarch, such as fully-described in U.S. Patent No. 4,847,371 to Schara and Katcher. Spray-dried or solvent processed starches that are essentially in whole granule form when hydrated, such as those described in U.S. Patent Nos. 4,280,851 to Pitchon et al, 3,563,798 to Germino et al, 3,617,383 to Thurstan et al, and 3,705,891 to Tuschoff et al, may also be readily utilized in the process of this invention. Any pregelatinized starch that hydrates in a cold liquid to essentially 100% swollen whole granules will be useful for this invention.

As shown in the examples below, a readily-dispersible starch agglomerate is produced which can be used in making a creamy, smooth instant dessert having a shiny surface and a greatly reduced incidence of visual lumps. Attempts to prepare a comparable starch agglomerate using water alone, without the presence of the wetting agent, resulted in a starch material that had somewhat increased dispersibility, as compared to unagglomerated, unground starch, but which when used in an instant pudding mix produced a grainier textured pudding. Spraying a wetting agent, such as triacetin, onto the surface of a water-agglomerated fine grind starch did not improve performance of the starch in instant pudding mixes. Merely spraying a wetting agent, such as triacetin, onto the surface of fine-grind starch does not result in a readily-dispersible starch material. Although the starch material is described primarily in terms of spray-dried starch, other types of pregelatinized starch (e.g. drum dried) may also be employed.

This invention is further described but not limited by the following examples:

### EXAMPLE 1

300g of ground spray-dried cornstarch, as disclosed in the Schara and Katcher patent, was added to a benchtop-scale, fluid-bed agglomerator (Aeromatic Strea 1, mfg. by Aeromatic, Inc. Columbia, Maryland). The particle size distribution of the starch was less than 0.5% on a 140 U.S. mesh screen (106 »m) and at least 15% on a 400 U.S. mesh screen (38 »m). The starch was preheated to an air inlet temperature of 80°C after which agglomeration of the starch was effected via application of a 1% solution of triacetin applied at a constant rate of 180g over 20 minutes. After 20 minutes, the spray was stopped but fluidization of the bed with the 80°C air flow was continued for another 2 minutes to reduce the moisture of the agglomerate to about 8%.

The resulting starch agglomerate had a bulk density of about .16g/cc, was friable and had a particle size distribution of 75-85 through a 60 U.S. mesh screen (250 »m), 25-55% through a 100 U.S. mesh screen (150 »m) and 0.8% through a 270 U.S. mesh (53 »m).

### EXAMPLE 2

An instant, chocolate-flavored dessert mix was formulated as follows:

| | |
|---|---|
| Agglomerated Starch (Example 1) | 21g |
| Maltodextrin (10 D.E.) | 10g |
| Disodium phosphate | 1.5g |
| Tetrasodium Pyrophosphate | 1.5g |
| Cocoa | 12g |
| Aspartame | as desired |
| Flavor/Color | as desired |

This mix was added to two cups of cold milk and mixed with a wire whisk for one minute at which time the mix had essentially completely dispersed. Upon setting, a smooth, creamy pudding was obtained which was completely lump-free.

### EXAMPLE 3

The procedure of Examples 1 and 2 were repeated utilizing a drum-dried, pregelatinized tapioca starch having a somewhat coarser particle size distribution. The agglomerate produced was equivalent in size to that of Example 1 and the instant pudding produced was acceptable and lump-free.

### EXAMPLE 4

9 pounds of ground, pregelatinized cornstarch, as in Example 1, was placed in a Glatt™ 5/9 Agglomerator (mfg. by Air Techniques, Inc. Ramsey, New Jersey) and preheated to 40°C (with air having an inlet air temperature of 70°C). 2800g of a 1.5% triacetin solution was applied at a constant rate over a 33 minute period to effect agglomeration. The agglomerated starch was passed through a 30 U.S. mesh screen (600 »m) to remove undesirable coarse particles prior to being added to an instant pudding mix.

### EXAMPLE 5

200g of finely-ground pectin (100% through a 200 U.S. mesh [75 »m], less than 65% on 400 U.S. mesh [38 »m]) was added to the benchtop-scale, fluid-bed agglomerator of Example 1. The pectin was preheated with heated air having an inlet temperature of 80°C. Agglomeration was accomplished via spray application of a 2% solution of triacetin in water applied at a constant rate of 150g over 18 minutes. The resulting agglomerated pectin had a particle size distribution of 100% through U.S. 40 mesh (425 »m), less than 45% through 140 U.S. mesh (106 »m), and less than 10% through 270 U.S. mesh (53 »m). The bulk density of the agglomerated pectin after sieving through a 40 U.S. mesh screen (425 »m) was 0.28 g/cc and the pectin was readily dispersible in cold tap water using a fork within 45 seconds.

### EXAMPLE 6

500g of a vanilla instant pudding mix as set forth below was agglomerated as in Example 5 using a 1% triacetin solution applied at a rate to result in 101 to 135 of solution applied over 11 to 11.5 minutes.

| | |
|---|---|
| Sugar | 76.2g |
| Pre-Gelatinized Starch (as in Example 1) | 19.5g |
| Tetrasodium Pyrophosate | 1.75g |
| Disodium Phosphate | 1.75g |
| Mono and Diglycerides | 0.5g |
| Vanilla Flavor/Color | as desired |

The agglomerated pudding mix when added to 2 cups of cold milk dispersed by stirring with a spoon within 30 seconds.

## Claims

1. A method for producing a friable agglomerate consisting essentially of fine particles of a hydrocolloid and a wetting agent wherein said hydrocolloid is selected from the group consisting of pregelatinized starch, pectin, gelatin, polysaccharide gums and combinations thereof and wherein said wetting agent has little or no emulsifying capabilities comprising the steps of:
(a) obtaining fine particles of said hydrocolloid, said particles having a size distribution of 0.5% by weight maximum on a 140 U.S. mesh sieve (106 »m) and 15% by weight minimum on a 400 U.S. mesh sieve (38 »m);
(b) spraying the particles with a wetting agent to a level of 0.1 to 3% wetting agent by weight of the hydrocolloid and agglomerating the sprayed particles; and
(c) drying the agglomerates to a moisture content of less than about 10% by weight.

2. A method according to claim 1, wherein the wetting agent is selected from the group consisting of triacetin, glycerol, propylene glycol, tributyrin, and mixtures thereof.

3. A method according to claim 2, wherein the particles are sprayed with an aqueous triacetin solution containing from 0.1 to 7% wetting agent by weight of solution.

4. A method according to any one of claims 1 to 3, wherein the hydrocolloid is a pregelatinized starch which hydrates in a cold liquid to essentially 100% swollen whole starch granules.

5. A method according to claim 4, wherein the pregelatinized starch is a spray-dried pregelatinized starch.

6. A method according to claim 5, wherein the fine starch particles are particles of ground, spray-dried pregelatinized starch having a particle size distribution of less than 3% greater than 170 U.S. mesh sieve (90 »m) and less than 6% greater than 200 U.S. mesh sieve (75 »m).

7. A method according to any one of claims 1 to 6, wherein the level of wetting agent is from 0.5 to 2% by weight of the hydrocolloid material.

8. A method according to any one of claims 1 to 7, wherein the sprayed particles are agglomerated in a fluidized bed or tower agglomerator.

9. Readily-dispersible, friable agglomerates consisting essentially of finely-ground pregelatinized starch particles and a wetting agent which has little or no emulsifying capabilities wherein the agglomerates have a bulk density of from 0.1 to 0.3g/cc and a particle size distribution of maximum 90% by weight through a 60 U.S. mesh sieve (250 »m) and a maximum of 10% by weight through a 270 U.S. mesh sieve (53 »m), wherein the starch particles formed into the agglomerate have a particle size distribution of 0.5% by weight maximum on a 140 U.S. mesh sieve (106 »m) and 15% by weight minimum on a 400 U.S. mesh sieve (38 »m) and the bulk density of the starch is reduced by at least 50% as a result of agglomeration, and wherein the wetting agent is spray-coated onto the surface of the starch particles being agglomerated at a level of from 0.1 to 3% by weight of the starch.

10. A sugar-free, instant powdered food mix comprised of from 40 to 60% of the agglomerates of claim 9, a carbohydrate bulking agent, an intensive sweetener, flavor and color.

11. A sugar-free food mix according to claim 10, wherein the food mix is an instant dessert mix and additionally contains phosphate setting salts.

## Patentansprüche

1. Verfahren zur Herstellung eines bröckeligen Agglomerats, das im wesentlichen aus feinen Partikeln eines Hydrokolloids und einem Benetzungsmittel besteht, worin genanntes Hydrokolloid aus der Gruppe ausgewählt wird, die aus vorverkleisterter Stärke, Pektin, Gelatine, Polysaccharidgummen und Kombinationen davon besteht und worin genanntes Benetzungsmittel wenig oder keine Emulgierfähigkeiten besitzt, das die folgenden Schritte umfaßt:
(a) Gewinnung feiner Partikel von genanntem Hydrokolloid, worin genannte Partikel eine Größenverteilung von maximal 0,5 Gew.-% auf einem 140-Mesh-Sieb nach U.S.-Standard (106 »m) und minimal 15 Gew.-% auf einem 400-Mesh-Sieb nach U.S.-Standard (38 »m) aufweisen;
(b) Besprühen der Partikel mit einem Benetzungsmittel bis zu einem Anteil von 0,1 bis 3 Gew.-% Benetzungsmittel bezogen auf das Hydrokolloid und Agglomerieren der besprühten Partikel; und
(c) Trocknen der Agglomerate auf einen Feuchtigkeitsgehalt von weniger als circa 10 Gew.-%.

2. Verfahren nach Anspruch 1, worin das Benetzungsmittel aus der Gruppe ausgewählt wird, die aus Triacetin, Glycerol, Propylenglycol, Tributyrin und Gemischen davon besteht.

3. Verfahren nach Anspruch 2, worin die Partikel mit einer wäßrigen Triacetinlösung besprüht werden, die von 0,1 bis 7 Gew.-% Benetzungsmittel bezogen auf die Lösung enthält.

4. Verfahren nach einem der Ansprüche 1 bis 3, worin das Hydrokolloid eine vorverkleisterte Stärke ist, die in einer kalten Flüssigkeit zu im wesentlichen 100% gequollenen ganzen Stärkekörnchen hydratisiert.

5. Verfahren nach Anspruch 4, worin die vorverkleisterte Stärke eine sprühgetrocknete vorverkleisterte Stärke ist.

6. Verfahren nach Anspruch 5, worin die feinen Stärkepartikel Teilchen aus gemahlener sprühgetrockneter vorverkleisterter Stärke mit einer Partikelgrößenverteilung von weniger als 3% größer als 170-Mesh-Sieb nach U.S.-Standard (90 »m) und weniger als 6% größer als 200-Mesh-Sieb nach U.S.-Standard (75 »m) sind.

7. Verfahren nach einem der Ansprüche 1 bis 6, worin der Anteil des Benetzungsmittels von 0,5 bis 2 Gew.-% des Hydrokolloidmaterials beträgt.

8. Verfahren nach einem der Ansprüche 1 bis 7, worin die besprühten Partikel in einem Wirbelbett oder Agglomerationsturm agglomerisiert werden.

9. Leicht dispergierbare, bröckelige Agglomerate, die im wesentlichen aus feingemahlenen vorverkleisterten Stärkepartikeln und einem Benetzungsmittel bestehen, das wenig oder keine Emulgierfähigkeiten besitzt, worin die Agglomerate eine Fülldichte von 0,1 bis 0,3 g/cc und eine Partikelgrößenverteilung von maximal 90 Gew.-% durch ein 60-Mesh-Sieb nach U.S.-Standard (250 »m) und maximal 10 Gew.-% durch ein 270-Mesh-Sieb nach U.S.-Standard (53 »m) aufweisen, worin die zum Agglomerat geformten Stärkepartikel eine Partikelgrößenverteilung von maximal 0,5 Gew.-% auf einem 140-Mesh-Sieb nach U.S.-Standard (106 »m) und minimal 15 Gew.-% auf einem 400-Mesh-Sieb nach U.S.-Standard (38 »m) aufweisen und die Fülldichte der Stärke aufgrund von Agglomeration um mindestens 50% vermindert ist und worin das Benetzungsmittel auf die Oberfläche der Stärkepartikel, die bei einem Anteil von 0,1 bis 3 Gew.-% der Stärke agglomeriert sind, sprühaufgetragen wird.

10. Zuckerfreies Instantpulver-Nährmittelgemisch, das aus 40 bis 60% der Agglomerate nach Anspruch 9, einem Kohlenhydratfüllmittel, einem Intensivsüßstoff, Geschmacks- und Farbstoff besteht.

11. Zuckerfreies Nährmittelgemisch nach Anspruch 10, worin das Nährmittelgemisch ein Instantdessert-Mix ist und außerdem Phosphaterstarrungssalze enthält.

## Revendications

1. Méthode pour produire un agglomérat friable composé essentiellement de particules fines d'un hydrocolloïde et d'un agent mouillant dans laquelle ledit hydrocolloïde est sélectionné dans le groupe composé d'amidon prégélatinisé, pectine, gélatine, gommes de polysaccharides et combinaisons de ceux-ci et dans laquelle ledit agent mouillant a peu ou pas de capacités émulsionnantes comprenant les étapes de:
(a) obtention de particules fines dudit hydrocolloïde, lesdites particules ayant une distribution granulométrique de 0,5% en poids maximum sur un écran américain de 140 meshs (106 »m) et 15% en poids minimum sur un écran américain de 400 meshs (38 »m);
(b) vaporisation des particules avec un agent mouillant jusqu'à un niveau de 0,1 à 3% d'agent mouillant en poids de l'hydrocolloïde et agglomération des particules vaporisées; et
(c) séchage des agglomérats jusqu'à un contenu d'humidité inférieur à environ 10% en poids.

2. Méthode selon la revendication 1, dans laquelle l'agent mouillant est sélectionné dans un groupe constitué de triacétine, glycérol, propylèneglycol, tributyrine, et des mélanges de ceux-ci.

3. Méthode selon la revendication 2, dans laquelle les particules sont vaporisées avec une solution de triacétine acqueuse contenant de 0,1 à 7% d'agent mouillant en poids de solution.

4. Méthode selon l'une quelconque des revendications 1 à 3, dans laquelle l'hydrocolloïde est un amidon prégélatinisé qui s'hydrate dans un liquide froid en essentiellement des grains d'amidon entiers gonflés à 100%.

5. Méthode selon la revendication 4, dans laquelle l'amidon prégélatinisé est un amidon prégélatinisé séché par pulvérisation.

6. Méthode selon la revendication 5, dans laquelle les particules fines d'amidon sont des particules d'amidon prégélatinisé séché par pulvérisation, broyé, ayant une distribution granulométrique de particules de moins de 3% supérieure à l'écran américain de 170 meshs (90 »m) et de moins de 6% supérieure à l'écran américain de 200 meshs (75 »m).

7. Méthode selon l'une quelconque des revendications 1 à 6, dans laquelle le niveau d'agent mouillant est de 0,5 à 2% en poids de la matière hydrocolloïde.

8. Méthode selon l'une quelconque des revendications 1 à 7, dans laquelle les particules vaporisées sont agglomérées dans un lit fluidisé ou une tour d'agglomération.

9. Agglomérats friables, aisément dispersables, composés essentiellement de particules d'amidon prégélatinisé finement broyé et d'un agent mouillant qui a peu ou pas de capacités émulsionnantes dans lesquels les agglomérats ont une densité volumique en vrac allant de 0,1 à 0,3g/cc et une distribution granulométrique de particules de 90% maximum en poids à travers un écran américain de 60 meshs (250 »m) et de 10% maximum en poids à travers un écran américain de 270 meshs (53 »m), dans lesquels les particules d'amidon formées dans l'agglomérat ont une distribution granulométrique de particules de 0,5% en poids maximum sur un écran américain de 140 meshs (106 »m) et de 15% en poids minimum sur un écran américain de 400 meshs (38 »m) et la masse volumique en vrac de l'amidon est réduite d'au moins 50% à la suite de l'agglomération, et dans lesquels l'agent mouillant est appliqué au pistolet sur la surface des particules d'amidon étant agglomérées à un niveau de 0,1 à 3% en poids de l'amidon.

10. Préparation alimentaire instantanée en poudre, sans sucre, composée à raison de 40 à 60% des agglomérats de la revendication 9, d'un agent de charge de glucides, d'un édulcorant intensif, d'un arôme et d'un colorant.

11. Une préparation alimentaire sans sucre selon la revendication 10, dans laquelle la préparation alimentaire est une préparation pour dessert instantanée et contient en outre des sels de prise de phosphate.
